# FASCICULE DE BREVET EUROPEEN

(11) **EP 0 494 031 B1**
(45) Date de publication et mention de la délivrance du brevet: **15.02.1995**
(21) Numéro de dépôt: 91470027.3
(22) Date de dépôt: 23.09.1991
(51) Int. Cl.: A61C 19/00

(54) **Dispositif de distribution des liquides pour un appareil de nettoyage, de désinfection et de lubrification des pièces à main de dentisterie**
Flüssigkeitsverteilungvorrichtung für ein Apparat zum Reinigen, Desinfizieren und Schmieren zahnärtzlicher Handstücke
Liquid distribution device for a cleaning, disinfecting and lubricating apparatus for dental handpieces

(30) Priorité: 23.11.1990 FR 9014843
(43) Date de publication de la demande: 08.07.1992
(73) Titulaire: MICRO MEGA S.A., F-25000 Besançon (FR)
(72) Inventeur: Melon, Bernard, F-25870 Auxon Dessus (FR); Guggenheim, Bernhard, Prof.Dr., / (CH)
(74) Mandataire: Poupon, Michel

(56) Documents cités:
- EP-A- 0 300 945
- FR-A- 2 425 844
- US-A- 4 752 444

## Description

La présente invention a pour objet un dispositif de distribution de liquides pour un appareil de nettoyage, de désinfection et de lubrification des pièces à main de dentisterie, dispositif du type dans lequel les liquides sont libérés, à partir de leur source respective d'alimentation ou de stockage, pour être amenés à pénétrer et éventuellement traverser les pièces à main disposées dans ledit appareil, par le biais d'électrovannes s'ouvrant séquentiellement à chaque poste suivant un cycle en chenillard.

Une dispositif comportant les caracteristiques du préambule de la revendication 1 est connu du EP-A-0 300 945.

Au moins quotidiennement, le chirurgien-dentiste doit procéder systématiquement au nettoyage, à la lubrification et à la stérilisation ou désinfection des pièces à main qu'il utilise.

Auparavant, ces différents opérations étaient réalisées manuellement avec l'aide de divers instruments, tels que par exemple bombe de spray, etc... Ces opérations étaient fastidieuses et certains praticiens ne les exécutaient donc pas avec la fréquence nécessaire, sinon imparfaitement. Il faut noter en outre que chaque pièce à main devait être nettoyée séparément, ce qui multipliaient d'autant le temps passé.

On a déjà proposé pour remédier à cette situation des appareils autonomes permettant le nettoyage, la désinfection et la lubrification des pièces à main de dentisterie. De tels appareils sont par exemple décrits dans les brevets ou demandes de brevet FR 2 618 357 et EP 0 300 945.

L'expérience montre qu'un nettoyage et une désinfection acceptables ne peuvent être assurés de façon constante et satisfaisante que si les temps d'action des fluides correspondants sont parfaitement constants et que les quantités de liquide passant au travers des pièces à main sont elles aussi constantes, quelle que soit la pièce à main placée sur un des postes de traitement. Cette constance doit être assurée d'un poste à l'autre, d'un cycle de traitement à l'autre, et ceci que tous les postes soient en action ou que l'un ou plusieurs d'entre eux soit(soient) inactif(s).

Le mode de réalisation décrit dans la demande de brevet européen 0 300 945 ne permet pas d'assurer cette constance avec suffisamment de précision, malgré le dispositif de chenillard qui commande les électrovannes de sortie.

De plus, dans ce dispositif, les réservoirs de liquide sont en pression permanente dès que l'appareil est en fonctionnement, ce qui représente un danger si l'opérateur a mal refermé le bouchon d'un des réservoirs lors de l'opération de remplissage.

La présente invention a pour but de fournir un dispositif qui remédie aux inconvénients précités, capable d'assurer une distribution constante des liquides de traitement.

La présente invention a pour objet un dispositif de distribution de liquides comme défini dans la revendication 1.

On obtient ainsi une excellente précision sur la quantité de liquide injecté, car le volume injecté à chaque impulsion, la pression du liquide étant constante, ne dépend que du temps d'ouverture du passage, c'est-à-dire de l'électrovanne correspondante ; temps que par les systèmes à microprocesseur on peut contrôler avec une grande précision.

Une autre caractéristique de l'invention est que les conduites d'air et de liquide peuvent être associées par une seule et même électrovanne du type 3/2 laissant passer soit l'air soit l'eau suivant le cycle dans le chenillard.

Une troisième caractéristique essentielle de l'invention est que les liquides sont distribués en étoile par des conduites partant d'un point commun, ce point commun étant relié à un dispositif d'électrovanne laissant passer soit l'eau soit le désinfectant, situés dans des réservoirs sous pression et que les réservoirs sous pression sont remplis par gravité par les liquides contenus dans des réservoirs hors pression, la conduite du réservoir hors pression vers le réservoir sous pression étant pourvue d'un dispositif anti-retour de telle sorte que le remplissage du réservoir sous pression se fasse lorsque ce dernier est hors pression et s'arrête automatiquement lorsque la pression y est rétablie.

On comprendra mieux l'invention à l'aide de la description faite ci-après d'un mode de mise en oeuvre donné à titre d'exemple non limitatif en référence aux dessins annexés dans lesquels :
- la figure 1 est une représentation du fonctionnement en chenillard du système d'injection et pulvérisation des liquides pour un appareil à quatre postes ;
- la figure 2 représente le schéma hydropneumatique d'un mode de réalisation ;
- les figures 3A, 3B, 3C représentent en coupe le dispositif d'un poste de traitement d'une pièce à main autre que la turbine à air ;
- la figure 4 représente en coupe le dispositif de spray pour la désinfection externe.

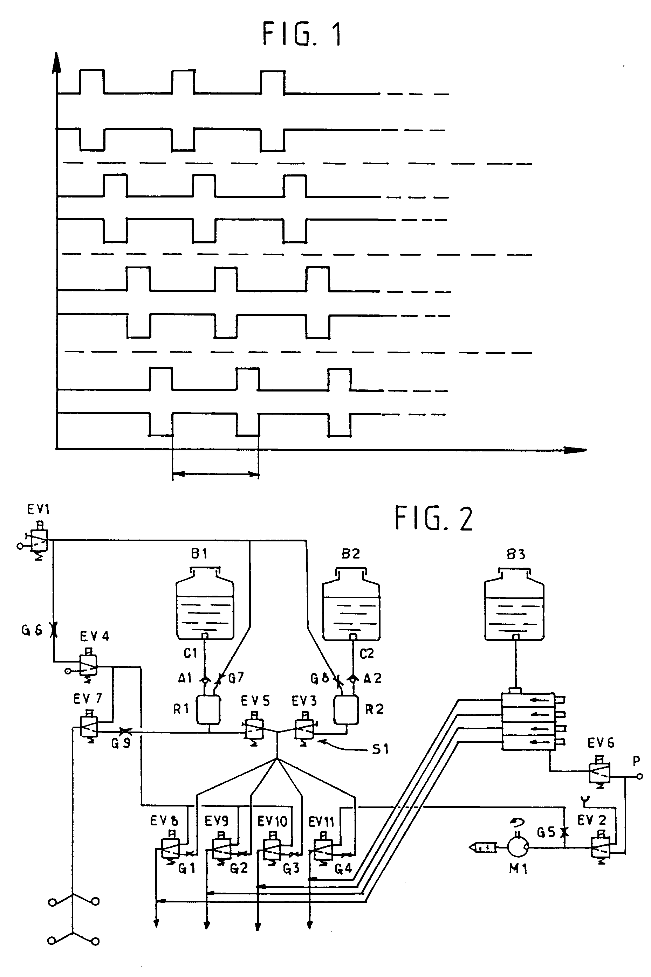

On a illustré à la figure 1 le principe du fonctionnement en chenillard pour l'injection et la pulvérisation (air) des liquides pour un appareil à quatre postes. On notera l'aspect séquentiel sur un même cycle permettant de traiter successivement chaque poste avant de revenir au point de départ d'un nouveau cycle.

La figure 2 représente l'ensemble du schéma hydropneumatique, qui se compose de deux réservoirs B1 et B2 respectivement pour désinfectant et eau, au bas desquels des conduites comprenant chacune un anti-retour respectivement A1 et A2 assurent la liaison avec les réservoirs R1 et R2 mis en pression par des conduites C1, C2 reliées à un dispositif de sélection S1 permettant le passage soit du désinfectant soit de l'eau ; S1 pouvant être réalisé comme sur le schéma 1 par deux électrovannes de type 2/2 ou 3/2 montées en 2/2 à clapet soit une électrovanne à piston de type 3/2 montée en 3/2. A la sortie de S1 une distribution en étoile permet le raccordement, par autant de conduites qu'il y a de postes de traitement, aux électrovannes EV8 à EV11 donnant directement dans les nez des postes de traitement ; EV8 à EV11 étant des électrovannes 3/2 qui pourraient être remplacées chacune par deux électrovannes 2/2. La seconde entrée des électrovannes correspondant aux postes de traitement de pièces entrainées mécaniquement est reliée à la sortie de EV1.

Afin d'assurer deux débits différents d'air, par exemple l'un pour la pulvérisation des liquides ou de l'huile et l'autre pour le séchage interne, on pourra, comme indiqué sur le schéma, intercaler une électrovanne EV4 dont une entrée est reliée à la sortie de EV1 par une conduite pourvue d'un gicleur G6, l'autre entrée étant directement reliée au réseau d'air comprimé.

Pour assurer le traitement externe des pièces à main, une électrovanne EV7 à une de ses entrées reliée a la sortie de EV4 et l'autre soit à la sortie de R1, si l'on ne fait en externe que de la désinfection, soit à la sortie de R2, si l'on ne fait en externe que du nettoyage, soit à la sortie de S1 si l'on veut faire les deux, la sortie de EV7 alimentant les buses de spray externe.

L'électrovanne correspondant au poste recevant des pièces à main entrainées à l'air (turbines - il peut y en avoir plusieurs) est reliée par l'intermédiaire d'une conduite comprenant un gicleur G5 à la sortie d'une électrovanne EV2 commandant aussi la rotation du moteur à air M1, qui assure la rotation des pièces à main. Ceci permet d'assurer la rotation de la turbine en même temps que le moteur M1 assure l'entraînement des pièces montées sur les autres postes de traitement, et en même temps d'assurer le soufflage comme celui provenant de EV4 pour les autres postes. La seconde entrée de EV2 est reliée à un dispositif de graissage du moteur à air, de telle sorte que ce moteur ne soit graissé que lorsqu'il ne fonctionne pas. Le dispositif de graissage des pièces à main étant du même type que celui décrit dans la demande de brevet EP 0 300 945.

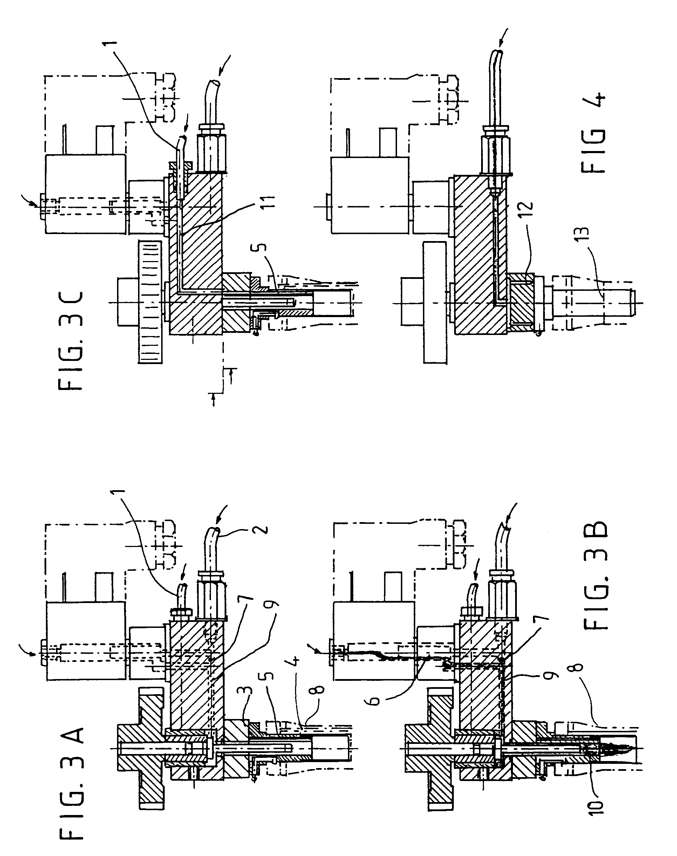

Les figures 3A, 3B, 3C montrent une coupe de l'ensemble mécanique au niveau de l'axe d'un poste de traitement de pièces entrainé mécaniquement.

On remarquera que l'huile emprunte, jusqu'à l'entrée de la pièce à main, un chemin (1) complètement indépendant du chemin (2) eau/désinfectant, de telle sorte que l'huile n'étant injectée que dans une pièce préalablement séchée à l'air, il n'y ait jamais de mélange huile/désinfectant ou huile/eau. De plus, le nez-support (3) est tel que l'huile ne peut en aucun cas pénétrer dans les canaux de spray (4) de la pièce à main, le chemin (1) débouchant sur le nez par une conduite (5) au-delà des prises de spray (4).

La figure 3A représente la position d'injection d'une quantité d'eau ou d'alcool (désinfectant), l'arrivée d'air étant fermée en (6).

A la figure 3B, on bloque l'arrivée de désinfectant en (7) et on injecte de l'air en ouvrant en (6), ce qui a pour résultat de déplacer le désinfectant vers et à travers la pièce à main (8) par les conduites (9,10) avec également passage au travers des conduites de spray (4).

A la figure 3C, on a représenté le cheminement (1,11,5) de l'huile, indépendant de celui du désinfectant.

La figure 4 montre la disposition des buses de spray externe. Quatre buses (12) sont réparties autour de l'axe (13) de la pièce à main, de telle sorte que les jets coniques assurent un mouillage de toutes les surfaces externes de la pièce avec de l'alcool grâce à l'électrovanne EV7.

Sur l'un des éléments tournants entrainés par le moteur pneumatique, on réalise un détecteur de rotation, qui peut avantageusement être constitué d'un aimant fixé sur une partie tournante passant devant un capteur magnétique. Ce dispositif géré par la carte à microprocesseur qui commande l'ensemble de l'appareil permet à la fois de s'assurer de la rotation du moteur et donc des pièces à main, mais aussi que la pression ne descend pas en-dessous du seuil fonctionnel de l'appareil.

Afin d'éviter que l'appareil ne soit mis en route alors que la quantité de l'un des liquides n'est plus suffisante pour assurer un traitement complet, les réservoirs R1 et R2 sont définis de telle façon, que leur contenance permet la réalisation d'un cycle complet. De plus, des détecteurs de présence de liquide sont placés sur les conduits de descente par gravité, en amont des clapets anti-retour. On pourra se limiter à un seul capteur, qui sera judicieusement placé sur le conduit correspondant au liquide de plus forte consommation. Le capteur pourra par exemple être un capteur capacitif qui permet de détecter la présence de liquide sans autre élément complémentaire. Lorsque la présence de liquide n'est plus détectée, l'appareil pourra finir le cycle en cours grâce au contenu de R1 et R2, et sera automatiquement bloqué à la commande du cycle suivant.

Plusieurs électrovannes peuvent être remplacées par une ou plusieurs électrovannes assurant globalement les mêmes fonctions, ceci afin de limiter le nombre d'électrovannes à utiliser.

## Revendications

1. Dispositif de distribution de liquides pour un appareil de nettoyage, de désinfection et de lubrification des pièces à main de dentisterie, dispositif dans lequel les liquides sont libérés, à partir de leur source respective d'alimentation ou de stockage, pour être amenés à pénétrer et traverser les pièces à main disposées dans ledit appareil, par le biais d'électrovannes s'ouvrant séquentiellement à chaque poste suivant un cycle en chenillard, caractérise en ce que ledit dispositif comporte une conduite d'arrivée (C1,C2) pour chaque liquide destinée à envoyer chaque liquide (1,2) sous pression jusqu'à la pièce à main sous forme effectivement liquide et non pas sous forme de brouillard, et en ce que le dispositif comporte une conduite (6) séparée de la conduite d'arrivée destinée à pulvériser ensuite le liquide (1,2) dans la pièce à main par de l'air sous pression arrivant par ladite conduite (6) séparée.

2. Dispositif selon la revendication 1, caractérisé en ce que les conduites d'air et de liquide sont associées par une seule et même électrovanne du type 3/2 laissant passer soit l'air soit l'eau suivant le cycle dans le chenillard.

3. Dispositif selon l'une quelconque des revendications 1 et 2, caractérisé en ce que les liquides sont distribués en étoile par des conduites partant d'un point commun, ce point commun étant relié à un dispositif d'électrovanne laissant passer soit l'eau soit le désinfectant, situés dans des réservoirs sous pression et que les réservoirs sous pression (R1,R2) sont remplis par gravité par les liquides contenus dans des réservoirs hors pression (B1,B2), la conduite du réservoir hors pression vers le réservoir sous pression étant pourvue d'un dispositif anti-retour (A1,A2) de telle sorte que le remplissage du réservoir sous pression se fasse lorsque ce dernier est hors pression et s'arrête automatiquement lorsque la pression y est rétablie.

4. Dispositif selon l'une quelconque des revendications 1 à 3, caractérisé en ce que le dispositif hydropneumatique se compose de deux réservoirs (B1) et (B2) respectivement pour désinfectant et eau, au bas desquels des conduites comprenant chacune un anti-retour respectivement (A1) et (A2) assurent la liaison avec les réservoirs (R1) et (R2) mis en pression par des conduites (C1, C2) reliées à un dispositif de sélection (S1) permettant le passage soit du désinfectant soit de l'eau, (S1) pouvant être réalisé par deux électrovannes de type 2/2 ou 3/2 montées en 2/2 à clapet soit une électrovanne à piston de type 3/2 montée en 3/2, à la sortie de (S1) une distribution en étoile permettant le raccordement, par autant de conduites qu'il y a de postes de traitement, aux électrovannes (EV8 à EV11) donnant directement dans les nez des postes de traitement, (EV8 à E11) étant des électrovannes 3/2 ou deux électrovannes 2/2, la seconde entrée des électrovannes correspondant aux postes de traitement de pièces entrainées mécaniquement étant reliée à la sortie de (EV1).

5. Dispositif selon la revendication 4, caractérisé en ce que afin d'assurer deux débits différents d'air, l'un pour la pulvérisation des liquides ou de l'huile et l'autre pour le séchage interne, on intercale une électrovanne (EV4) dont une entrée est reliée à la sortie de (EV1) par une conduite pourvue d'un gicleur (G6), l'autre entrée étant directement reliée au réseau d'air comprimé.

6. Dispositif selon l'une quelconque des revendications 4 et 5, caractérisé en ce que pour assurer le traitement externe des pièces à main, une électrovanne (EV7) a une de ses entrées reliée à la sortie de (EV4) et l'autre soit à la sortie de (R1), si l'on ne fait en externe que de la désinfection, soit à la sortir de (R2), si l'on ne fait en externe que du nettoyage, soit à la sortie de (S1) si l'on veut faire les deux, la sortie de (EV7) alimentant les buses de spray externe.

7. Dispositif selon l'une quelconque des revendications 4 à 6, caractérisé en ce que l'électrovanne correspondant au poste recevant des pièces à main entrainées à l'air est reliée par l'intermédiaire d'une conduite comprenant un gicleur (G5) à la sortie d'une électrovanne (EV2) commandant aussi la rotation du moteur à air M1, qui assure la rotation des pièces à main, la seconde entrée de (EV2) étant reliée à un dispositif de graissage du moteur à air, de telle sorte que ce moteur ne soit graissé que lorsqu'il ne fonctionne pas.

8. Dispositif selon l'une quelconque des revendications 1 à 7, caractérisé en ce que l'huile emprunte, jusqu'à l'entrée de la pièce à main, un chemin (1) complètement indépendant du chemin (2) eau/désinfectant, de telle sorte qu'il n'y ait jamais de mélange huile/désinfectant ou huile/eau et que le nez-support (3) est tel que l'huile ne peut en aucun cas pénétrer dans les canaux de spray (4) de la pièce à main, le chemin (1) débouchant sur le nez par une conduite (5) au-delà des prises de spray (4).

9. Dispositif selon la revendication 8, caractérisé en ce que les buses (12) de spray externe sont au nombre de quatre réparties autour de l'axe (13) de la pièce à main, de telle sorte que les jets coniques assurent un mouillage de toutes les surfaces externes de la pièce avec de l'alcool grâce à l'électrovanne (EV7).

10. Dispositif selon l'une quelconque des revendications 1 à 9, caractérisé en ce que sur l'un des éléments tournants entrainés par le moteur pneumatique, on dispose un détecteur de rotation, qui peut avantageusement être constitué d'un aimant fixé sur une partie tournante passant devant un capteur magnétique, ce dispositif géré par la carte à microprocesseur qui commande l'ensemble de l'appareil permettant à la fois de s'assurer de la rotation du moteur et donc des pièces à main, mais aussi que la pression ne descend pas en-dessous du seuil fonctionnel de l'appareil.

11. Dispositif selon l'une quelconque des revendications 1 à 10, caractérisé en ce que afin d'éviter que l'appareil ne soit mis en route alors que la quantité de l'un des liquides n'est plus suffisante pour assurer un traitement complet, les réservoirs (R1) et (R2) sont définis de telle façon, que leur contenance permette la réalisation d'un cycle complet, des détecteurs de présence de liquide étant placés sur les conduits de descente par gravité, en amont des clapets anti-retour.

## Claims

1. Device for distributing liquids for an apparatus for cleaning, disinfecting and lubricating dental hand-pieces, a device in which the liquids are released from their respective supply or storage source in order to be brought to penetrate and traverse the hand-pieces disposed in said apparatus, through the intermediary of solenoids which open sequentially at each station according to a cycle in a caterpillar-like system, characterised in that said device comprises an inlet pipeline (C1, C2) for each liquid, intended to send each liquid (1, 2) under pressure to the hand-piece effectively in liquid form and not in mist form, and in that the device comprises a pipeline (6), which is separated from the inlet pipeline and intended to atomise subsequently the liquid (1,2) in the hand-piece by pressurised air arriving through said separate pipeline (6).

2. Device according to claim 1, characterised in that the air and liquid pipelines are connected by one and the same solenoid of the 3/2 type, allowing either air or water to pass depending on the cycle in the caterpillar-like system.

3. Device according to any of claims 1 and 2, characterised in that the liquids are distributed in a star-like manner by pipelines starting from a common point, this common point being connected to a solenoid device allowing either water or disinfectant to pass, such liquids being situated in pressurised reservoirs, and in that the pressurised reservoirs (R1, R2) are filled by gravity by the liquids contained in unpressurised reservoirs (B1, B2), the pipeline which extends from the unpressurised reservoir to the pressurised reservoir being provided with a non-return device (A1, A2) so that the pressurised reservoir is filled when the latter is unpressurised, and the filling process automatically stops when the pressure therein is re-established.

4. Device according to any of claims 1 to 3, characterised in that the hydro-pneumatic device comprises two reservoirs (B1) and (B2) respectively for disinfectant and water, at the bottom of which reservoirs pipelines - each comprising a non-return device (A1) and (A2) respectively - ensure the connection with the reservoirs (R1) and (R2) pressurised by pipelines (C1, C2), which are connected to a selection device (S1) permitting the passage of either disinfectant or water, (S1) being able to be provided by two solenoids of the 2/2 type or of the 3/2 type fitted as 2/2 with a valve, or by one piston solenoid of the 3/2 type fitted as 3/2, at the outlet of (S1) a star-like distribution permitting the connection, by as many pipelines as there are treatment stations, to the solenoids (EV8 to EV11) leading directly into the nozzles of the treatment stations, (EV8 to EV11) being 3/2 solenoids or two 2/2 solenoids, the second inlet of the solenoids - corresponding to the treatment stations of mechanically driven pieces - being connected to the outlet of (EV1).

5. Device according to claim 4, characterised in that, in order to ensure two different air flows, one for the atomisation of the liquids or the oil and the other for internal drying, a solenoid (EV4) is interpolated, one inlet of which is connected to the outlet of (EV1) by a pipeline provided with an atomiser (G6), the other inlet being directly connected to the compressed air network.

6. Device according to any of claims 4 and 5, characterised in that, in order to ensure the external treatment of the hand-pieces, a solenoid (EV7) has one of its inlets connected to the outlet of (EV4) and the other either to the outlet of (R1), if only the disinfection process is being carried out externally, or to the outlet of (R2), if only the cleaning process is being carried out externally, or to the outlet of (S1) if it is desirable for both processes to be carried out, the outlet of (EV7) supplying the jets of external spray.

7. Device according to any of claims 4 to 6, characterised in that the solenoid corresponding to the station receiving hand-pieces driven by air is connected, by means of a pipeline comprising an atomiser (G5), to the outlet of a solenoid (EV2) also controlling the rotation of the air motor M1, which ensures the rotation of the hand-pieces, the second inlet of (EV2) being connected to a lubricating device for the air motor, so that this motor is only lubricated when it is not operating.

8. Device according to any of claims 1 to 7, characterised in that the oil takes, as far as the hand-piece inlet, a path (1) which is completely independent of the water/disinfectant path (2), so that there is never any oil/disinfectant or oil/water mixture, and in that the nozzle support (3) is such that the oil cannot in any case penetrate into the spray channels (4) of the hand-piece, the path (1) terminating at the nozzle in a pipeline (5) beyond the spray channels (4).

9. Device according to claim 8, characterised in that the jets (12) of external spray are distributed in fours around the axis (13) of the hand-piece, so that the conical jets ensure that all the external surfaces of the piece are wetted with alcohol by means of the solenoid (EV7).

10. Device according to any of claims 1 to 9, characterised in that a rotation detector is disposed on one of the revolving elements driven by the pneumatic motor, which detector may advantageously comprise a magnet secured to a revolving portion passing in front of a magnetic sensor, this device being governed by the microprocessor card which controls the whole apparatus, thereby permitting the rotation of the motor to be ensured and hence the rotation of the hand-pieces, yet also ensuring that the pressure does not fall below the operational threshold of the apparatus.

11. Device according to any of claims 1 to 10, characterised in that, in order to prevent the apparatus from being operated when the quantity of one of the liquids is no longer sufficient to ensure a full treatment, the reservoirs (R1) and (R2) are defined in such a manner that their contents permit the operation of a complete cycle, detectors which detect the presence of liquid being placed on the gravity feed pipelines, upstream of the non-return valves.

## Patentansprüche

1. Flüssigkeitsverteilungsvorrichtung für einen Apparat zum Reinigen, Desinfizieren und Schmieren zahnärztlicher Handstücke, bei der die Flüssigkeiten von ihren Versorgungspunkten oder ihren Speicherquellen aus derart freigesetzt werden, daß sie in die Handstücke eindringen und diese durchqueren, welche in den besagten Apparat eingelegt sind, indem sich sequentiell an jeder Arbeitsstation in der einem Kreislauf Elektroventile öffnen, **dadurch gekennzeichnet,** daß die Vorrichtung eine Zulaufleitung (C1, C2) für jede Flüssigkeit aufweist, die dazu vorgesehen ist, jede Flüssigkeit (1, 2) bis zu dem Handstück unter Druck in effektiv flüssiger Form und nicht in Gestalt eines Nebels zu führen, und daß die Vorrichtung über eine weitere Leitung (6) verfügt, die getrennt von der Zulaufleitung angeordnet ist, um anschließend die Flüssigkeit (1, 2) in dem Handstück unter Zusatz von Druckluft zu zerstäuben, die über die besagte getrennte Zulaufleitung (6) herangeführt wird.

2. Vorrichtung nach Anspruch 1, dadurch gekennzeichnet, daß die Zuleitungen für Luft und Flüssigkeit mit einem einzigen Elektroventil des 3 /2-Wegeventil-Typs versehen sind, das entweder Luft oder Wasser entsprechend dem Arbeitsschritt des Kreislaufes durchläßt.

3. Vorrichtung nach einem der Ansprüche 1 oder 2, dadurch gekennzeichnet, daß die Flüssigkeiten sternförmig durch den von einem gemeinsamen Punkt vorgesehenen Abgang der Zuleitungen verteilt werden, wobei dieser gemeinsame Punkt mit einer Elektroventil-Einrichtung verbunden ist, die entweder das Wasser oder das Desinfektionsmittel durchläßt, die sich beide in unter Druck stehenden Behältern befinden, und daß die unter Druck stehenden Behälter (R1, R2) durch die Schwerkraft von nicht unter Druck stehenden Behältern (B1, B2) gefüllt werden, wobei die Leitung von dem jeweils nicht unter Druck stehenden Behälter zu dem zugeordneten unter Druck stehenden Behälter mit einer Rückflußsperreinrichtung (A1, A2) in solcher Weise verbunden ist, daß das Befüllen des unter Druck stehenden Behälters dann stattfindet, wenn dieser ohne Druck ist und automatisch stoppt, wenn sich der Druck wieder aufgebaut hat.

4. Vorrichtung nach einem der Ansprüche 1 bis 3, dadurch gekennzeichnet, daß die hydropneumatische Einrichtung aus zwei Behältern (B1 und B2) besteht, die jeweils für das Desinfektionsmittel und Wasser vorgesehen ist und an derem Boden Leitungen angeschlossen sind, die über eine Einrichtung zur Rückflußsperrung (A1 und A2) verfügen und die die Verbindung der über die Zuleitungen (C1, C2) unter Druck stehenden Behälter (R1 und R2) gewährleisten, die an eine Auswahleinrichtung (S1) angeschlossen sind, die den Durchfluß entweder des Desinfektionsmittels oder des Wassers gestattet, wobei die Auswahleinrichtung (S1) aus zwei Elektroventilen des Typs 2/2-Wege oder als 2/2-Wegeventil installierte des Typs 3/2-Wege oder aus einem Elektroventil mit Kolben des Typs 3/2-Wege, welches als 3/2-Wegeventil angeordnet ist, wobei an dem Ausgang der Auswahleinrichtung (S1) ein sternförmiger Verteiler vorgesehen ist, der die Verbindung von soviel Zuleitungen mit den Elektroventilen (EV8 bis EV11) gestattet, wie Arbeitsstationen vorgesehen sind, wobei diese direkt in die Nasen der Arbeitsstationen führen, wobei es sich bei den Elektroventilen (EV8 bis EV11) um Elektroventile des Typs 3/2-Wege oder um jeweils zwei Elektroventile des Typs 2/2-Wege handelt, wobei der zweite Anschluß der Elektroventile den Arbeitsstationen für die mechanisch zugeführten Handstücke zugeordnet ist, wobei diese mit dem Ausgang des Elektroventils (EV1) verbunden sind.

5. Vorrichtung nach Anspruch 4, dadurch gekennzeichnet, daß zur Gewährleistung von zwei unterschiedlichen Raten der Luftabgabe, einer zur Zerstäubung der Flüssigkeiten oder des Öls und der anderen zur inneren Trocknung, ein Elektroventil (EV4) zwischengeschaltet wird, dessen einer Eingang mit dem Ausgang des Elektroventils (EV1) über eine mit einer Spritzdüse (G6) versehene Leitung verbunden ist und dessen anderer Eingang direkt mit der Quelle der Druckluft verbunden ist.

6. Vorrichtung nach einem der Ansprüche 4 oder 5, dadurch gekennzeichnet, daß zur Gewährleistung der äußeren Behandlung der Handstücke ein Elektroventil (EV7) vorgesehen ist, dessen einer Eingang mit dem Ausgang des Elektroventils (EV4) und dessen anderer Eingang entweder mit dem Ausgang des Behälters (R1), wenn das Handstück außen nur desinfiziert wird, oder mit dem Ausgang des Behälters (R2), wenn das Handstück außen nur gereinigt wird, oder mit dem Ausgang von der Einrichtung (S1) verbunden ist, wenn beides durchgeführt werden soll, wobei der Ausgang des Elektroventils (EV7) mit den Düsen für das äußere Besprühen verbunden ist.

7. Vorrichtung nach einem der Ansprüche 4 bis 6, dadurch gekennzeichnet, daß das Elektroventil, welches der Arbeitsstation zugeordnet ist, die die Handstücke aufnimmt, die von der Luft mitgeführt werden, über eine Zuleitung verbunden ist, die eine Spritzdüse (G5) an dem Ausgang eines Elektroventils (EV2) aufweist, der auch die Drehung des Luftmotors M1 steuert, der die Drehung der Handstücke gewährleistet, wobei der zweite Eingang des Elektroventils (EV2) mit einer Schmiereinrichtung für den Luftmotor in einer solchen Weise verbunden ist, daß dieser Motor nur dann geschmiert wird, wenn er nicht arbeitet.

8. Vorrichtung nach einem der Ansprüche 1 bis 7, dadurch gekennzeichnet, daß das Öl bis zum Eingang des Handstückes einen Weg (1) nimmt, der vollkommen unabhängig von dem Weg (2) des Wassers / Desinfektionsmittels ist, so daß es niemals ein Vermischen zwischen Öl / Desinfektionsmittel oder Öl / Wasser geben kann und daß das Öl in keinem Fall in die Sprühkanäle (4) des Handstückes eindringen kann, wobei der Weg (1) an der Nase durch eine Leitung (5) über die Öffnungen der Sprühdüsen (4) hinausragt.

9. Vorrichtung nach Anspruch 8, dadurch gekennzeichnet, daß die Düsen (12) der äußeren Sprüheinrichtung in vier Stücken vorgesehen sind, die um die Achse (13) des Handstückes in einer solchen Weise angeordnet sind, daß die konisch verlaufenden Sprühkanäle dank des Elektroventils (EV7) ein Benässen aller äußeren Oberflächen des Handstückes mit Alkohol gewährleisten.

10. Vorrichtung nach einem der Ansprüche 1 bis 9, dadurch gekennzeichnet, daß auf einem der sich drehenden Elemente, die von dem pneumatischen Motor angetrieben werden, ein Rotationsdetektor angeordnet ist, der vorteilhafterweise aus einem Magneten besteht, der sich auf einem sich drehenden Bereich vor einem Magnetdetektor vorbeibewegt, wobei diese Einrichtung von einer Mikroprozessorkarte angesteuert wird, die die Gesamtheit der Vorrichtung steuert und es gleichzeitig gestattet, die Drehung des Motors und damit der Handstücke zu gewährleisten und die den Druck nicht unter den Schwellwert für die Funktionsfähigkeit des Gerätes absinken läßt.

11. Vorrichtung nach einem der Ansprüche 1 bis 10, dadurch gekennzeichnet, daß zur Vermeidung des Vorgangs, daß das Gerät angeschaltet wird, wenn die Menge einer der Flüssigkeiten nicht ausreichend ist, um eine vollständige Behandlung zu gewährleisten, die Behälter (R1 und R2) in einer solche Weise ausgestaltet sind, daß der Behälterinhalt die Realisation eines vollständigen Arbeitszyklus sicherstellt, wobei Füllstandsdetektoren für die Flüssigkeiten auf den zum Befüllen durch Schwerkraft ausgelegten Leitungen oberhalb der Rückflußsperrventile angeordnet sind.
